# FASCICULE DE BREVET EUROPEEN

(11) **EP 3 237 785 B1**
(45) Date de publication et mention de la délivrance du brevet: **16.06.2021**
(21) Numéro de dépôt: 15828363.0
(22) Date de dépôt: 22.12.2015
(51) Int. Cl.: F16L 11/08, F16L 57/06, B32B 5/16

(54) **CONDUITE TUBULAIRE FLEXIBLE POUR SUSPENSIONS ABRASIVES**
FLEXIBLE RÖHRENFÖRMIGE LEITUNG FÜR ABRASIVE SUSPENSIONEN
FLEXIBLE TUBULAR PIPE FOR ABRASIVE SUSPENSIONS

(30) Priorité: 22.12.2014 FR 1463106
(43) Date de publication de la demande: 01.11.2017
(73) Titulaire: Technip France, 92400 Courbevoie (FR)
(72) Inventeur: VIALE, Sébastien, 78150 Le Chesnay (FR)
(74) Mandataire: Fédit-Loriot
(86) Numéro de dépôt international: PCT/FR2015/053714
(87) Numéro de publication internationale: WO 2016/102886

(56) Documents cités:
- FR-A1- 2 993 955
- SE-L- 8 301 505
- US-A1- 2013 167 965
- US-B1- 6 227 249

## Description

La présente invention se rapporte à une conduite tubulaire flexible pour le transport des suspensions d'agrégats miniers désagrégés en milieu marin.

Un domaine d'application envisagé est celui de l'extraction des minerais de dépôts de sulfures massifs situés dans les fonds marins. Il s'agit ainsi d'excaver, d'extraire, puis de remonter les agrégats miniers désagrégés en suspension dans l'eau de mer ou noyés dans une boue, en surface. De tels gisements miniers sont généralement situés sous de grande profondeur d'eau, dans des zones volcaniques, ce qui rend complexe leur exploitation.

Au surplus, les dépôts de sulfures massifs sont des roches incluant des métaux et présentant des arêtes saillantes. Aussi, la remontée de ces agrégats miniers se faisant à travers des conduites flexibles en matériau polymère, ces dernières sont rapidement dégradées par ces roches à arêtes saillantes.

Des conduites flexibles connues, faite d'un corps tubulaire en matériau polymère flexible, permettent de transporter des suspensions abrasives. Le corps tubulaire comprend des anneaux métalliques ou bien en céramique, noyés dans le matériau polymère et installés de proche en proche. La surface intérieure de ces anneaux vient alors affleurer la surface interne du corps tubulaire. Partant, lorsque les suspensions abrasives contenant les agrégats s'écoulent à l'intérieur de la conduite flexible, la surface interne du corps tubulaire fait du matériau polymère est partiellement préservée, puisque les agrégats viennent en contact avec les surfaces solides des anneaux.

On pourra se référer au document WO2006/112710, lequel décrit une telle conduite flexible.

Les anneaux successifs sont sensiblement parallèles les uns aux autres et ils sont libres les uns par rapport aux autres, ce qui permet la flexibilité de la conduite. En revanche, les surfaces internes de la conduite situées entre les anneaux, s'usent rapidement au contact des agrégats. Au surplus, les anneaux anti-usures sont malaisés à centrer dans l'épaisseur du matériau polymère du corps tubulaire.

Aussi, un problème qui se pose et que vise à résoudre la présente invention est de fournir une conduite flexible dont la longévité est augmentée.

Dans ce but, la présente invention propose une conduite tubulaire flexible, du type de celle décrite par les documents normatifs API 17J et API RP 17B de l'American Petroleum Institute, pour le transport, en milieu marin, de suspensions d'agrégats miniers désagrégés, ladite conduite tubulaire flexible comportant à l'intérieur une couche en matériau polymère définissant une surface interne libre, ladite couche comportant des éléments de protection noyés dans l'épaisseur de ladite couche pour pouvoir venir affleurer ladite surface interne libre de façon à préserver ladite couche lorsque des suspensions d'agrégats miniers désagrégés s'écoulent à l'intérieur de ladite conduite tubulaire flexible. Lesdits éléments de protection comprennent des particules d'un lubrifiant solide.

Ainsi, une caractéristique de l'invention réside dans la mise en oeuvre de particules de lubrifiant solide dans l'épaisseur de la couche de matériau polymère. Les lubrifiants solides sont par nature des composés aisément cisaillables sous l'effet des frottements. On fournira dans la suite de la description, des structures de lubrifiant solide et des exemples. La couche de matériau polymère définit une couche tubulaire assurant un chemisage de la conduite tubulaire flexible. De la sorte, lorsque les agrégats miniers désagrégés s'écoulent à la surface interne de ladite couche, ils viennent dans un premier temps araser sur une faible épaisseur le polymère jusqu'à la découverte des particules de lubrifiant solide, lesquelles permettent alors de diminuer les forces de frottement de l'écoulement de la suspension d'agrégats miniers désagrégés à la surface. Par conséquent, en diminuant les forces de frottement de la suspension d'agrégats miniers désagrégés au contact de la surface interne de la couche de matériau polymère on diminue son usure. Au surplus, les particules de lubrifiant solide viennent ralentir l'abrasion de la paroi interne de la couche de polymère. La dureté des particules de lubrifiant solide est en effet supérieure à celle du matériau polymère.

En outre, les particules de lubrifiant solide sont aisément mises en oeuvre lors de l'extrusion de la couche de matériau polymère comparativement à l'insertion des anneaux selon l'art antérieur.

Selon une caractéristique de l'invention particulièrement avantageuse, lesdites particules dudit lubrifiant solide sont réparties de manière homogène dans l'épaisseur de ladite couche en matériau polymère. Par conséquent, et de la même façon, elles sont réparties de manière homogène à la surface interne de la couche en matériau polymère. Partant, elles offrent des portions de surfaces internes libres réparties de façon homogène sur la surface interne, permettant de diminuer les efforts de frottement avec la suspension d'agrégats miniers désagrégés. On comprend également que l'écoulement de ces agrégats miniers désagrégés provoque une usure homogène de la surface interne libre, tant du matériau polymère que des particules de lubrifiant solide, et par conséquent définit une surface tubulaire régulière.

Selon un mode de mise en œuvre de l'invention particulièrement avantageux, lesdits éléments de protection comprennent en outre des particules d'un matériau dur présentant une dureté supérieure à 8 sur l'échelle de Mohs. Par exemple, on met en œuvre des particules de carbure de silicium dont la dureté référencée sur l'échelle de Mohs est supérieur à celle du corindon et, est de l'ordre de 9,5. De la sorte, on vient non seulement renforcer la couche de matériau polymère, mais au surplus, le matériau dur devient abrasif vis-à-vis des agrégats miniers désagrégés. Partant, le matériau dur solidement ancré dans le polymère et venant en saillie de la surface interne libre, tend à provoquer également la fracture des agrégats. Cela permet de faciliter plus encore l'écoulement.

Selon une première variante d'exécution, le lubrifiant solide est un matériau présentant une structure lamellaire. On citera comme exemple de ce type de lubrifiant solide, le graphite, le bisulfure de molybdène, le nitrure de bore ou encore le fluorure de graphite. Le graphite et le bisulfure de molybdène, présentent l'avantage d'être tout deux d'origine naturelle et les moins coûteux à mettre en œuvre.

Selon une deuxième variante d'exécution, le lubrifiant solide est un matériau polymère. De préférence un matériau polymère présentant de longues chaînes droites orientées. Le plus performant en termes, d'efficacité sur coût, est le polytétrafluoroéthylène. Les fluoropolymères au sens large, sous forme de particules sensiblement sphériques peuvent avantageusement être mis en œuvre comme lubrifiant solide dans le matériau polymère de ladite couche.

Selon une troisième variante d'exécution, le lubrifiant solide est un matériau métallique mou. Un matériau mou présente par définition une faible dureté et on citera comme exemple susceptible d'être ici mis en œuvre le plomb ou bien l'étain.

En outre, selon un autre mode de mise en œuvre de l'invention particulièrement avantageux, la conduite flexible comprend en outre une sous-couche en matériau polymère située autour de ladite couche en matériau polymère. Le matériau polymère mis en œuvre pour la sous-couche peut avantageusement être le même que celui de ladite couche incluant le lubrifiant solide. Préférentiellement, la couche et la sous-couche constitue une même gaine en matériau polymère, et seule une épaisseur interne de la gaine constitue la couche incluant le lubrifiant solide. On donnera dans la description qui suivra, des modes de réalisation possible de la couche de matériau polymère et de la sous-couche.

Aussi, et selon encore un autre mode de mise en œuvre, ledit matériau polymère de ladite couche est un matériau thermodurcissable. Dans certaines circonstances d'utilisation de la conduite flexible, notamment lorsque la température est élevée, il est nécessaire d'obtenir un matériau polymère extrêmement résistant qui permet un parfait emprisonnement des particules de lubrifiant solide. Aussi, un matériau polymère thermodurcissable permet d'obtenir une telle rigidité grâce à la réticulation de ses chaînes de polymères. Aussi, la température, dans la plage de mise en œuvre, n'aura aucun impact sur ses propriétés.

Bien évidemment, un matériau polymère thermoplastique peut être mis en œuvre pour réaliser ladite couche, lorsque les conditions d'utilisation le permettent.

Avantageusement, la conduite flexible selon l'invention comporte en outre au moins un fil d'armure enroulé en hélice à pas court autour de ladite couche interne pour pouvoir reprendre les efforts radiaux. Ainsi, un fil d'armure, avantageusement métallique, est enroulé en hélice en formant des spires jointives, autour de ladite couche interne. De la sorte, on vient préserver non seulement la couche interne de la pression hydrostatique qui s'accroît avec la profondeur d'eau, mais aussi, de la pression interne de la suspension d'agrégats.

Au surplus, la conduite flexible comporte en outre, de préférence, au moins une pluralité de fils d'armure de traction enroulés en hélice à pas long autour de ladite couche interne pour pouvoir reprendre les efforts de traction. Ces fils d'armure de traction sont enroulés autour du fil d'armure enroulé à pas court, et ils permettent de reprendre les efforts de traction qui s'exercent sur la conduite flexible, lesquels efforts de traction sont d'autant plus importants que la conduite est longue et la mer profonde.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique partielle en écorché d'une conduite tubulaire flexible conforme à l'invention ; et,
- la Figure 2 est une vue schématique de la structure interne Il d'un élément de la conduite tubulaire flexible illustrée sur la figure 1.

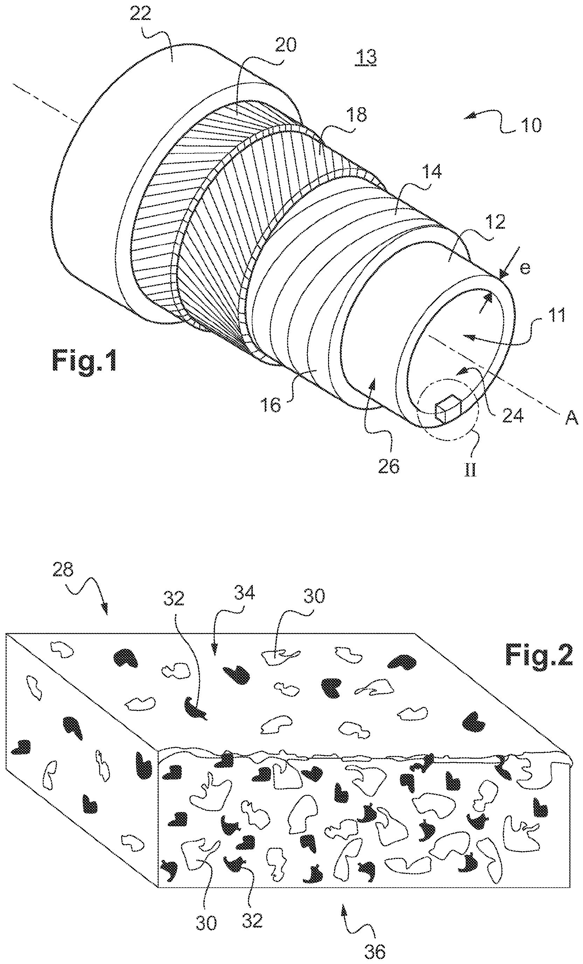

La figure 1 montre en écorché, une conduite flexible 10, présentant, de l'intérieur 11 vers l'extérieur 13, une couche d'un matériau polymère 12, une couche de reprise des efforts de pression 14 faite d'un fil d'armure métallique 16 enroulé en hélice à pas court autour de la couche de matériau polymère 12, deux couches de fils d'armure de traction 18, 20 et une gaine externe de protection 22.

Un tel type de conduite flexible 10 est destiné à l'excavation des fonds marins et à l'extraction des suspensions d'agrégats miniers désagrégés ou boues, pour les remonter vers la surface. En particulier, il s'agit de pouvoir extraire des minerais de gisements de sulfures massifs. Ces derniers, situés dans les fonds marins volcaniques, sont riches en métaux communs tels le cuivre, le plomb ou le zinc, et aussi en métaux précieux, tels l'or ou l'argent.

Aussi, compte tenu de la nature très abrasives des produits transportés sous forme de suspensions, à l'intérieur des conduites flexibles, il est nécessaire que ces dernières soient résistantes, et en particulier la couche la plus interne, celle en matériau polymère 12.

La couche en matériau polymère 12 présente une surface interne libre 24, et à l'opposé, une surface externe 26. L'épaisseur e de cette couche 12, correspond à la distance radiale entre les deux surfaces opposées 24, 26.

On décrira plus en détail la nature de la couche en matériau polymère 12, en référence à la Figure 2.

La Figure 2 représente un échantillon parallélépipédique rectangle 28 de la couche en matériau polymère 12, prélevé dans l'épaisseur. L'échantillon 28 montre des inclusions de deux types de particules, des particules d'un lubrifiant solide 30 et des particules d'un matériau dur 32 que l'on détaillera ci-après. La couche en matériau polymère 12 forme une gaine tubulaire, laquelle est réalisée au moyen d'une installation d'extrusion.

Le polymère mis en œuvre est, de façon avantageuse et selon un premier mode de réalisation, un polymère thermoplastique du type fluoropolymère, par exemple, le polyfluorure de vinylidène, dont l'abréviation anglaise est PVDF. Aussi, en amont de l'installation d'extrusion, le matériau polymère sous forme de granulés est mélangé à des particules d'un lubrifiant solide et des particules d'un matériau dur.

Selon une première variante de réalisation, le lubrifiant solide présente une structure lamellaire. On utilisera pour ce faire et de façon particulièrement avantageuse, le graphite ou bien le bisulfure de molybdène lesquels sont relativement peu coûteux. Le graphite, ou le bisulfure de molybdène sont mélangés sous forme pulvérulente aux granulés du matériau polymère dans une proportion supérieure à 10 % en poids, par exemple supérieure à 20 %. Préférentiellement, au moins deux granulométries de lubrifiant solide sont mises en œuvre de manière à obtenir une meilleure polydispersité. Par exemple, la taille des particules de lubrifiant solide est comprise entre 0,1 µm et 10 µm. Avantageusement, elle est comprise entre 0,5 µm et 7,5 µm.

Avantageusement, mais non obligatoirement, on mélange également les granulés de matériau polymère avec un matériau dur pulvérulent, dont la dureté du matériau est supérieure à 8 sur l'échelle de Mohs, et par exemple 9,5. Le carbure de silicium est par exemple un bon candidat pour l'application envisagée. La taille des particules de matériau dur pulvérulent est par exemple comprise entre 50 µm et 750 µm. La quantité de particules du matériau dur est supérieure à 10 % en poids de la masse totale du mélange de matériau polymère, par exemple supérieure à 15 %.

Ainsi, le mélange de matériau polymère pulvérulent et de particules de graphite et de particules de carbure de silicium est mise en œuvre à l'intérieur de l'installation d'extrusion. On obtient de la sorte une couche de matériau polymère 12 telle qu'illustrée sur la figure 1.

Cette couche de matériau polymère 12 présente une structure interne telle que représentée sur la figure 2 de l'échantillon 28. Aussi, on y retrouve donc les particules de lubrifiant solide 30 et les particules de matériau dur 32 réparties de manière homogène dans l'épaisseur de la couche 12.

Ainsi, l'échantillon 28 présente une face supérieure 34 correspondant à la surface interne libre 24 de la couche matériau polymère 12 et une face opposée 36 correspondant à la surface externe 26. Aussi, lorsque des suspensions d'agrégats miniers désagrégés s'écoulent à l'intérieur 11 de la conduite tubulaire flexible 10, elles sont entraînées contre la surface interne libre 24. Ces suspensions sont relativement abrasives et par friction, elles viennent araser et éroder la surface interne libre 24 et de la sorte mettre au jour, tant les particules de lubrifiant solide 30 que les particules de matériau dur 32. Ainsi, les proportions de particules, tant de lubrifiant solide, que de matériau dur, et de matériau polymère, déterminent les rapports de surface relative sur la surface supérieure 34 de l'échantillon, de polymère et du lubrifiant solide ou de matériau dur.

Partant, plus le matériau polymère est chargé en particules de lubrifiant solide, plus la proportion de surface de matériau solide sera importante par rapport à la surface de matériau polymère. Aussi, les suspensions abrasives s'écouleront à la surface interne libre 24 de la couche de matériau polymère 12 d'autant plus facilement avec moins de forces de frottement. Au surplus, les particules de lubrifiant solide, bien qu'elles soient plus tendres que le matériau dur, sont plus dures que le polymère et par conséquent, accroissent les caractéristiques mécaniques de cette surface interne libre 24. Sa durée de vie en fonctionnement est ainsi allongée, d'un facteur supérieur à 1,5, par exemple 2.

De plus, l'écoulement des suspensions d'agrégats miniers désagrégés étant facilité, le débit à l'intérieur de la conduite tubulaire flexible 10 en est augmenté. De la sorte, non seulement la durée de vie de la conduite est augmentée mais au surplus la quantité de suspensions par unité de temps qui peut être remontée est accrue. La mise en œuvre du lubrifiant solide a ainsi un effet démultiplicateur sur l'exploitation.

En outre, grâce à aux particules de matériau dur, au caractère abrasif, les agrégats partiellement désagrégés peuvent se désagréger plus encore et ainsi permettre d'améliorer encore l'écoulement des suspensions à l'intérieur de la conduite tubulaire flexible 10.

Selon une deuxième variante de réalisation, le lubrifiant solide est un polymère à longue chaîne droite orientée, et avantageusement on met en œuvre du polytétrafluoroéthylène, dont l'abréviation en langue française est PTFE, plus connu sous le nom de marque téflon©. Ce matériau permet également de faciliter l'écoulement des suspensions d'agrégats miniers désagrégés, car il permet de réduire également les forces de frottement des agrégats à la surface 24 de la couche 12.

Il est par exemple mis en œuvre sous la forme de particules sphéroïdales, lesquelles, incluses dans le matériau polymère de la couche, tendent à être arasées avec le polymère au début de l'écoulement pour ensuite offrir une surface augmentée favorisant cet écoulement. Par la même, la vitesse d'usure de la surface interne 24 diminue.

D'autres polymères lubrifiants solides peuvent être mis en œuvre. On citera notamment les polyamides, les polyacétals ou encore les polyimides.

Selon une troisième variante de réalisation, certains métaux mous, par exemple le plomb, peuvent également être mis en œuvre dans la couche de matériau polymère, comme lubrifiant solide.

Selon ce premier mode de réalisation, ou le polymère utilisé pour réaliser la couche 12 est un polymère thermoplastique, et conformément à une variante d'exécution, on co-extrude deux couches d'un même matériau polymère, une couche interne incluant les particules de lubrifiant solide et éventuellement les particules de matériau dur, analogue à la couche 12 décrite ci-dessus, et une couche externe vierge de toutes particules. On obtient de la sorte une gaine relativement épaisse, dont seule une épaisseur, la plus interne, inclut les particules de lubrifiant solide et les particules de matériau dur le cas échéant. Un tel mode de mise en oeuvre présente un intérêt, lorsque l'on souhaite obtenir une gaine en matériau polymère relativement épaisse pour des besoins de résistance mécanique, tandis qu'il n'est pas nécessaire de prévoir des particules de lubrifiant solide dans toute l'épaisseur. Ainsi, une quantité moindre de lubrifiant solide peut être mise en œuvre.

Selon un second mode de réalisation, le matériau polymère utilisé pour réaliser la couche 12 est un polymère thermodurcissable. C'est-à-dire qu'il est mis en œuvre à l'état liquide à froid avec un composant réactif de manière à provoquer la polymérisation du polymère après l'inclusion des particules de lubrifiant solide et éventuellement des particules de matériau dur. Un tel mode de réalisation présente des avantages, lorsque l'on souhaite améliorer les caractéristiques mécaniques et de résistance à l'abrasion de la couche de matériau polymère. Au surplus, les particules de lubrifiant solide et les particules dures sont plus solidement ancrées dans le matériau polymère.

## Revendications

1. Conduite tubulaire flexible (10) pour le transport, en milieu marin, de suspensions d'agrégats miniers désagrégés, ladite conduite tubulaire flexible (10) comportant à l'intérieur une couche en matériau polymère (12) formant une gaine tubulaire et définissant une surface interne libre (24), ladite couche en matériau polymère (12) comportant des éléments de protection (30) noyés dans l'épaisseur de ladite couche en matériau polymère (12) pour pouvoir venir affleurer ladite surface interne libre (24) de façon à préserver ladite couche en matériau polymère (12) lorsque des suspensions d'agrégats miniers désagrégés s'écoulent à l'intérieur de ladite conduite tubulaire flexible (10),
**caractérisée en ce que** lesdits éléments de protection comprennent des particules d'un lubrifiant solide (30).

2. Conduite flexible selon la revendication 1, **caractérisée en ce que** lesdites particules dudit lubrifiant solide (30) sont réparties de manière homogène dans l'épaisseur (e) de ladite couche en matériau polymère (12).

3. Conduite flexible selon la revendication 1 ou 2, **caractérisée en ce que** lesdits éléments de protection comprennent en outre des particules d'un matériau dur (32) présentant une dureté supérieure à 8 sur l'échelle de Mohs.

4. Conduite flexible selon l'une quelconque des revendications 1 à 3, **caractérisée en ce que** le lubrifiant solide est un matériau présentant une structure lamellaire.

5. Conduite flexible selon l'une quelconque des revendications 1 à 3, **caractérisée en ce que** le lubrifiant solide est un matériau polymère.

6. Conduite flexible selon l'une quelconque des revendications 1 à 3, **caractérisée en ce que** le lubrifiant solide est un matériau métallique mou.

7. Conduite flexible selon l'une quelconque des revendications 1 à 6, **caractérisée en ce qu'**elle comprend en outre une sous-couche en matériau polymère située autour de ladite couche en matériau polymère (12).

8. Conduite flexible selon l'une quelconque des revendications 1 à 7, **caractérisée en ce que** ledit matériau polymère de ladite couche (12) est un matériau thermodurcissable.

9. Conduite flexible selon l'une quelconque des revendications 1 à 8, **caractérisée en ce qu'**elle comporte en outre au moins un fil d'armure (16) enroulé en hélice à pas court autour de ladite couche en matériau polymère (12) pour pouvoir reprendre les efforts radiaux.

10. Conduite flexible selon l'une quelconque des revendications 1 à 9, **caractérisée en ce qu'**elle comporte en outre au moins une pluralité de fils d'armure de traction enroulés en hélice à pas long autour de ladite couche matériau polymère (12) pour pouvoir reprendre les efforts de traction.

## Patentansprüche

1. Flexible Rohrleitung (10) für den Transport, in einer Meeresumgebung, von Suspensionen aus disaggregierten Bergbauaggregaten, wobei die flexible Rohrleitung (10) im Inneren eine Schicht aus Polymerwerkstoff (12) aufweist, die eine röhrenartige Umhüllung bildet und eine freie Innenfläche (24) definiert, wobei die Schicht aus Polymerwerkstoff (12) Schutzelemente (30) aufweist, die in die Dicke der Schicht aus Polymerwerkstoff (12) eingebettet sind, um mit der freien Innenfläche (24) in flächenbündigen Abschluss kommen zu können, so dass die Schicht aus Polymerwerkstoff (12) erhalten bleibt, wenn Suspensionen aus disaggregierten Bergbauaggregaten im Inneren der flexiblen Rohrleitung (10) fließen,
**dadurch gekennzeichnet, dass** die Schutzelemente Partikel aus einem Festschmierstoff (30) enthalten.

2. Flexible Rohrleitung nach Anspruch 1, **dadurch gekennzeichnet, dass** die Partikel aus dem Festschmierstoff (30) gleichmäßig in der Dicke (e) der Schicht aus Polymerwerkstoff (12) verteilt sind.

3. Flexible Rohrleitung nach Anspruch 1 oder 2, **dadurch gekennzeichnet, dass** die Schutzelemente ferner Partikel aus einem harten Werkstoff (32) enthalten, der eine Härte größer als 8 auf der Mohs-Skala aufweist.

4. Flexible Rohrleitung nach einem der Ansprüche 1 bis 3, **dadurch gekennzeichnet, dass** der Festschmierstoff ein Werkstoff ist, der eine lamellenartige Struktur aufweist.

5. Flexible Rohrleitung nach einem der Ansprüche 1 bis 3, **dadurch gekennzeichnet, dass** der Festschmierstoff ein Polymerwerkstoff ist.

6. Flexible Rohrleitung nach einem der Ansprüche 1 bis 3, **dadurch gekennzeichnet, dass** der Festschmierstoff ein weicher metallischer Werkstoff ist.

7. Flexible Rohrleitung nach einem der Ansprüche 1 bis 6, **dadurch gekennzeichnet, dass** sie ferner einer Unterschicht aus Polymerwerkstoff umfasst, welche die Schicht aus Polymerwerkstoff (12) umgibt.

8. Flexible Rohrleitung nach einem der Ansprüche 1 bis 7, **dadurch gekennzeichnet, dass** der Polymerwerkstoff der Schicht (12) ein duroplastischer Werkstoff ist.

9. Flexible Rohrleitung nach einem der Ansprüche 1 bis 8, **dadurch gekennzeichnet, dass** sie ferner wenigstens einen Armierungsdraht (16) aufweist, der mit kleiner Gangart spiralförmig um die Schicht aus Polymerwerkstoff (12) gewickelt ist, um die radialen Kräfte aufnehmen zu können.

10. Flexible Rohrleitung nach einem der Ansprüche 1 bis 9, **dadurch gekennzeichnet, dass** sie ferner wenigstens eine Mehrzahl von Zugarmierungsdrähten aufweist, die mit großer Gangart spiralförmig um die Schicht aus Polymerwerkstoff (12) gewickelt sind , um die Zugkräfte aufnehmen zu können.

## Claims

1. A flexible tubular pipe (10) for transporting, in an offshore environment, suspensions of loose mining aggregates, said flexible tubular pipe (10) comprising on the inside a layer of polymer material (12) forming a tubular sheath and defining a free internal surface (24), said layer of polymer material (12) comprising protective elements (30) embedded in the thickness of said layer of polymer material (12) so as to be able to lie flush with said free internal surface (24) so as to preserve said layer of polymer material (12) when suspensions of loose mining aggregates are flowing along inside said flexible tubular pipe (10),
**characterized in that** said protective elements contain particles of a solid lubricant (30).

2. The flexible pipe as claimed in claim 1, **characterized in that** said particles of said solid lubricant (30) are uniformly distributed through the thickness (e) of said layer of polymer material (12).

3. The flexible pipe as claimed in claim 1 or 2, **characterized in that** said protective elements further contain particles of a hard material (32) exhibiting a hardness greater than 8 on the Mohs scale.

4. The flexible pipe as claimed in any one of claims 1 to 3, **characterized in that** the solid lubricant is a material exhibiting a lamellar structure.

5. The flexible pipe as claimed in any one of claims 1 to 3, **characterized in that** the solid lubricant is a polymer material.

6. The flexible pipe as claimed in any one of claims 1 to 3, **characterized in that** the solid lubricant is a soft metallic material.

7. The flexible pipe as claimed in any one of claims 1 to 6, **characterized in that** it further comprises a sublayer of polymer material situated around said layer of polymer material (12).

8. The flexible pipe as claimed in any one of claims 1 to 7, **characterized in that** said polymer material of said layer (12) is a thermosetting material.

9. The flexible pipe as claimed in any one of claims 1 to 8, **characterized in that** it further comprises at least one armor wire (16) wound in a short-pitch helix around said layer of polymer material (12) so as to be able to react radial load.

10. The flexible pipe as claimed in any one of claims 1 to 9, **characterized in that** it further comprises at least a plurality of tensile armor wires wound in a long-pitch helix around said layer polymer material (12) so as to be able to react tensile load.
